# EUROPEAN PATENT APPLICATION

(11) **EP 1 718 095 A1**
(43) Date of publication of application: **02.11.2006**
(21) Application number: 05290927.2
(22) Date of filing: 26.04.2005
(51) Int. Cl.: H04Q 7/38, H04L 12/56, H04L 12/28, H04L 29/08

(54) **A method for fast reselection of the appropriate radio access technology, an access controller, a program module and a communication network therefor**

(71) Applicant: ALCATEL, 75008 Paris (FR)
(72) Inventor: Diaz Cervera, José, 46021 Valencia (ES); Cardona Marcet, Narciso, Prof. Dr., 46015 Valencia (ES); Kaminski, Stephan, 73054 Eislingen (DE); Sigle, Rolf, 73630 Remshalden (DE)
(74) Representative: Brose, Gerhard

(57) **Abstract**

The invention concerns a method for fast reselection of the appropriate radio access technology for transmission of data packets in a communication network deploying radio access technologies whereby a multi-radio Radio Link Control (RLC) sublayer (MR-RLC) and a multi-radio Medium Access Control (MAC) sublayer (MR-MAC), both common to at least two radio access technologies, are used for said transmission, that a segmentation common to said at least two radio access technologies of data packets on the multi-radio RLC sublayer (MR-RLC) is used, and that said reselection is performed on the multi-radio MAC sublayer (MR-MAC), an access controller, a program module and a communication network therefor.

## Description

The invention relates to a method for fast reselection of the appropriate radio access technology according to the preamble of claim 1, an access controller according to the preamble of claim 5, a program module according to the preamble of claim 8 and a communication network according to the preamble of claim 9.

In heterogeneous communication network environments, where a variety of radio access technologies (RATs) is available, a joint use of these radio access technologies, together with fast reselection mechanisms between different subsets of radio technologies, will allow for a better resilience against transmission errors as well as an improved overall capacity. For performing such fast reselection mechanism, it is possible to perform switching between the different radio access technologies either at (multiple) Internet Protocol IP packet level or below their associated Media Access Control Protocol Data Unit (MAC PDU) level. The first case could be considered as a fast form of handover. The second case could possibly provide additional benefits, but there are also some issues that must be addressed.

Reselection at (multiple) IP packet level is not fast enough to cope with fast degradations of the radio interface, e.g. caused by fading.

Reselection at MAC PDU level is faster, but it requires introducing a split between the MAC layer and the physical layer, which is very problematic due to the high level of integration between both protocols. In case of reselection at MAC PDU level, scheduling for each radio access technology is performed by each radio access technology specific MAC layer, but the actual transmission only takes place across one of the radio access technologies, whereas the communication between the MAC layer and the physical layer is disabled for the rest of the radio access technologies. However, such a split can be rather problematic. Since scheduling is carried out in the MAC layer, radio frames must be available at the physical layer at the exact time scheduled for their transmission, i.e. with very strict timing requirements. This would seriously limit the potential for buffering in the switch unit, forcing the need for a very high processing capacity in this unit. Moreover, for some technologies such as Wireless Local Area Network (WLAN), the high level of integration between the MAC and physical layers could make a split of both protocols unfeasible.

Moreover, some problems arise with respect to the exchange of acknowledgements for transmitted data in case the interface through which a particular data unit was sent is no longer available.

The object of the invention is to propose a method for fast reselection of the appropriate radio access technology for data transmission in a communication network deploying multiple radio access technologies which overcomes the above mentioned drawbacks.

This object is achieved by a method according to the teaching of claim 1, an access controller according to the teaching of claim 5, a program module according to the teaching of claim 8 and a communication network according to the teaching of claim 9.

The main idea of the invention is to propose a protocol architecture including a set of higher multi-radio layers, common to all involved radio access technologies, and different sets of lower RAT-specific layers. Only the functionality of multi-radio higher sublayers is further described, since the lower RAT-specific sublayers are defined in the standards of each particular radio access technology and are hence not covered here.

In heterogeneous communication network environments, where a multiplicity of alternative radio access technologies is available, an efficient usage of the overall radio resources will necessarily require a high degree of coordination between the involved radio access technologies. A high level of integration between different radio access technologies will allow for fast reaction against phenomena such as shadowing or fast fading, by selecting the most appropriate subset of radio interfaces for transmission at any given time, based mainly on link quality measurements for the available radio access technologies and similar kinds of information.

The process through which the active subset of radio technologies is changed, is termed as multi-radio reselection. Multi-radio reselection can be divided in two different processes with different time granularities, which will be named in the following slow and fast reselection, respectively.

The invention proposes the usage of common segmentation for each particular data flow, which is independent on the underlying radio access technologies. Therefore, higher sublayers shall contain a multi-radio Radio Link Control (MR-RLC) sublayer, which is common for all involved radio access technologies and provides segmentation of data into so-called MR-RLC Protocol Data Units.

The size of the MR-RLC Protocol Data Units must be carefully chosen in order to achieve an optimal utilization of all possible underlying radio access technologies, including but not limited to Universal Mobile Telecommunication System (UMTS), Global System for Mobile Communication/General Packet Radio Service (GSM/GPRS), Wireless Local Area Network (WLAN) and Bluetooth. For each particular radio access technology, the MR-RLC PDU size can be equal to, larger than or smaller than the size of MAC frames used by the RAT-specific lower layers. Therefore, it is possible to concatenate a number of MR-RLC Protocol Data Units into a single MAC frame or to perform a second segmentation of the MR-RLC Protocol Data Units into a number of MAC frames. If required, padding of the MAC frames may be used, although an appropriate choice of the MR-RLC PDU size must necessarily aim at minimizing the amount of padding. Segmentation, concatenation and padding functions may be provided by each particular RAT specific lower layer or alternatively as part of a toolbox of multi-radio data-link functions complementing existing RAT protocols.

Higher sublayers shall comprise also a multi-radio Media Access Control (MR-MAC) sublayer which is responsible for fast multi-radio reselection, i.e. for selecting the most appropriate subset of radio access technologies for the transmission of data of all data flows at any given time. Therefore, the MR-MAC sublayer is responsible for mapping data flows onto the available radio access technologies, i.e. it distributes MR-RLC Protocol Data Units to the different subsets of lower layers belonging to the available radio access technologies.

In order to carry out fast reselection, the MR-MAC sublayer must be previously configured with information on the suitable radio access technologies for each particular data flow. This is performed by the slow reselection process. The slow reselection process is carried out by means of radio resource management (RRM) procedures and its purpose is to determine, based on Quality of Service (QoS) requirements, link layer quality measurements and similar types of information, which radio access technologies are suitable for the transmission of each particular data flow and to configure the protocol stack, and in particular the MR-RLC and/or MR-MAC sublayers, with this information. After this is performed, MR-MAC sublayer is free to perform fast reselection for the configured data flows, i.e. it can select any subset of the suitable radio access technologies for each data flow for transmission at any given time. This includes transmitting across a single radio access technology or across several ones. In the latter case, it is possible to send the same or different information across each of the active radio access technologies, contributing to increase robustness or bandwidth, respectively.

Theoretically, it would be possible to choose a different RAT subset for the transmission of each MR-RLC Protocol Data Unit. As reselection at MR-MAC level is much faster than the reconfiguration of the MR-MAC layer through RRM mechanisms, this allows to react to fast changes in air interface conditions for the different radio access technologies. For instance, if fast fading occurs in one of the RAT interfaces, transmission can almost immediately switch to a different subset of radio access technologies, leading to a better robustness and performance for transmission.

Finally, an important advantage of the use of the MR-RLC sublayer is that acknowledgements for already transmitted data can be sent across any radio access technology and have not necessarily to be sent across the same radio access technology through which the related Protocol Data Units were originally sent. This is particularly important since this radio access technology may no longer be suitable for transmission or may not be active at the moment.

Further developments of the invention can be gathered from the dependent claims and the following description.

In the following the invention will be explained further making reference to the attached drawings.

Fig. 1 shows an example of a communication network in which the method according to the invention can be implemented.

Fig. 2 shows an example for the reselection of the appropriate radio access technology at MR-RLC level for multiple IP data flows.

Fig. 3 shows an example for the reselection of the appropriate radio access technology at MR-RLC level for multiple IP data flows with a higher level of integration.

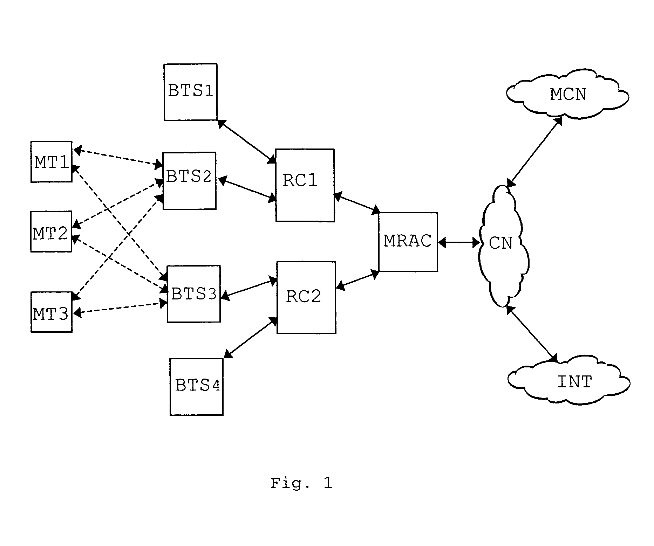

Fig. 1 shows by way of example a communication network according to the invention comprising three mobile terminals MT1-MT3, four base transceiver stations BTS1-BTS4, two radio controllers RC1 and RC2, an access controller MRAC, a core network CN and two further communication networks MCN and INT.

The access controller MRAC is connected to the two radio controllers RC1 and RC2, which are in turn connected to the two base transceiver stations BTS1 and BTS2, and BTS3 and BTS4 respectively, and to the core network CN. The connections are indicated by double arrows in Fig. 1. The three mobile terminals MT1-MT3 are within the radio coverage of the base transceiver stations BTS2 and BTS3, which is indicated by the dotted double arrows. The core network CN can be connected to further fixed or mobile communication networks, and in Fig. 1 by way of example the connection to a mobile communication network MCN and to the Internet INT is depicted by double arrows without showing network devices like switches or gateways necessary for establishing such connections for the sake of simplification.

The access controller MRAC according to the invention comprises means for receiving data flows sent from the core network or from other mobile or fixed communication networks MCN or INT via the core network CN, for fast reselection of the appropriate radio access technology and for sending the data flows to the mobile terminals MT1-MT3 via the part of the communication network, in which said appropriate radio access technology is implemented. Furthermore, the access controller MRAC comprises means for receiving data flows from said mobile terminals MT1-MT3 and for sending said data flows to the core network CN or to other mobile or fixed communication networks MCN or INT via the core network CN.

The radio controllers RC1 and RC2 comprise the functionality of administration of the radio resources of all connected base transceiver stations BTS1-BTS4.

The base transceiver stations BTS1-BTS4 comprise the functionality of an access point of a communication network, i.e. they provide the possibility for mobile terminals MT1-MT3 to get connected to a communication network.

The mobile terminals MT1-MT3 comprise the functionality of a mobile terminal for a communication network, i.e. they can be connected to a communication network by means of a base transceiver station BTS1-BTS4.

Data flows are sent from the core network or from other mobile or fixed communication networks MCN, INT via the access controller MRAC, the respective radio controller RC1 or RC2 and the respective base transceiver station BTS1, BTS2, BTS3 or BTS4 to the dedicated mobile terminal MT1, MT2 or MT3.

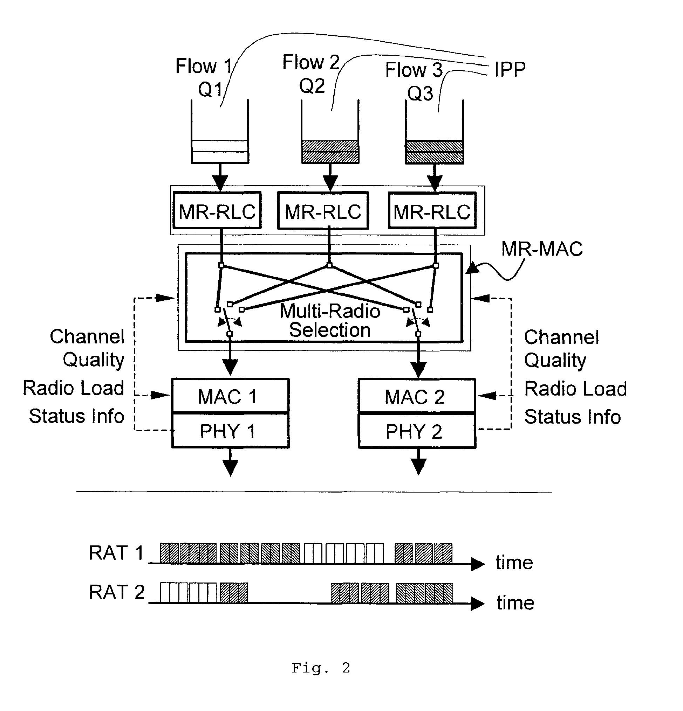

Fig. 2 shows an example of the method for fast reselection of the appropriate radio access technology. In Fig. 2, three different data flows Flow1-Flow3 of IP packets IPP, three queues Q1-Q3, a multi-radio Radio Link Control sublayer MR-RLC, a multi-radio Media Access Control sublayer MR-MAC, two MAC layers MAC1 and MAC2, two physical layers PHY1 and PHY2 and two different data flows RAT1 and RAT2 are depicted.

The three different data flows Flow 1, Flow 2 and Flow 3 of IP packets IPP, potentially belonging to different users, are sent to and stored in the queues Q1, Q2 and Q3 respectively. These queues Q1-Q3 are located in a communication network device connected to the access controller MRAC not depicted in Fig. 1 for sake of simplification. The data flows Flow 1-Flow 3 stored in the queues Q1-Q3 are sent to the Radio Link Control layer comprising the multi-radio Radio Link Control sublayer MR-RLC according to the invention, which is implemented also in said communication network device.

The multi-radio Radio Link Control sublayer MR-RLC is common for all radio access technologies and performs a common segmentation of the IP packets IPP of the different data flows Flow 1-Flow 3, segmenting the IP packets IPP into MR-RLC Protocol Data Units of the same length, independent of the radio access technology through which the information is to be ultimately transmitted. The MR-RLC sublayer is also responsible for the numeration of these MR-RLC Protocol Data Units.

In a preferred embodiment, the MR-RLC sublayer is also responsible for Automatic Repetition Request (ARQ), i.e. error recovery through retransmission of erroneously received Protocol Data Units.

In another embodiment, the queues Q1, Q2 and Q3 and the multi-radio Radio Link Control sublayer MR-RLC are implemented in the access controller MRAC, depicted in Fig. 1.

From the multi-radio Radio Link Control sublayer MR-RLC, the MR-RLC Protocol Data Units are sent to the multi-radio Media Access Control sublayer MR-MAC according to the invention. The fast reselection of the appropriate radio access technology is carried out in this multi-radio Media Access Control sublayer MR-MAC which is below the multi-radio Radio Link Control sublayer MR-RLC and can be considered as a higher layer of the MAC layer. This multi-radio Media Access Control sublayer MR-MAC performs switching between the two MAC layers MAC1 and MAC2 that are associated to the two different radio access technologies in our example. The multi-radio Media Access Control sublayer MR-MAC is implemented in the access controller MRAC depicted in Fig.1.

It is possible to define a granularity for each radio access technology. This granularity is equal to one in case the MR-RLC Protocol Data Unit is larger than the MAC frame of the respective radio access technology. Otherwise, the granularity corresponds to the number of MR-RLC Protocol Data Units which can be fitted within a single MAC frame. Once the multi-radio Media Access Control sublayer MR-MAC has selected a particular radio access technology, it must deliver to the RAT-specific MAC layer MAC1 or MAC2 so many consecutive MR-RLC Protocol Data Units as indicated by the RAT granularity. If the number of MR-RLC Protocol Data Units waiting for transmission is lower than the granularity of the selected RAT, the multi-radio Media Access Control sublayer MR-MAC may generate empty Protocol Data Units or command the RAT-specific MAC layer MAC1 or MAC2 to use extra padding.

The MAC layers MAC1 and MAC2 are implemented in our example in the base transceiver stations BTS1 and BTS2, and BTS3 and BTS4 respectively, i.e. the radio controller RC1 with the corresponding base transceiver stations BTS1 and BTS2 are based on a different radio access technology than the radio controller RC2 with the corresponding base transceiver stations BTS3 and BTS4.

In another embodiment, the functionality of the radio controller RC1 is integrated in the base transceiver stations BTS1 and BTS2 and in the access controller MRAC, and the functionality of the radio controller RC2 is integrated in the base transceiver stations BTS3 and BTS4 and in the access controller MRAC. In this embodiment, the access controller MRAC is directly connected to the base transceiver stations BTS1-BTS4 and performs not only the task of fast reselection of the appropriate radio access technology, but also switches the data flows Flow 1-Flow 3 to the appropriate base transceiver station BTS1-BTS4.

In another embodiment, the radio controllers RC1 and RC2 are colocated in one common radio controller and then, the access controller MRAC is integrated in said common radio controller. The multi-radio Media Access Control sublayer MR-MAC is therefore implemented in said common radio controller.

At the bottom of Fig. 2, the transmission of MAC frames belonging to the different data flows Flow 1-Flow 3 is depicted. The MAC frames are assigned to the respective data flows Flow 1-Flow 3 by means of the respective pattern. In the upper row, the data flow of MAC frames by means of the first radio access technology RAT1 is depicted and in the lower row, the data flow of MAC frames by means of the second radio access technology RAT2 is depicted. The granularities of the transmission using the first radio access technology and the second radio access technology correspond to three and two MR-RLC Protocol Data Units respectively, i.e. a MAC frame consists of three and two MR-RLC Protocol Data Units respectively. In this example, the second radio access technology is temporarily unavailable for transmission, e.g. due to a collision in a WLAN-based radio access technology, which leads to a time period without transmission of MAC frames as depicted in the lower row.

Finally, the data flows of MAC frames RAT1 and RAT2 are sent via the respective physical layer PHY1 or PHY2, implemented in the base transceiver station BTS2 or BTS3 respectively, to the dedicated mobile terminal MT1, MT2 or MT3.

With the approach described above, no split of the MAC and physical layers MAC1 and PHY1, and MAC2 and PHY2 respectively is required within the different radio access technologies. Multi-radio selection maps data flows Flow 1-Flow 3 from the same or different users onto the MAC layers MAC1 and MAC2 of the available radio access technologies. The purpose is twofold: To ensure that all data flows are serviced fairly and to achieve a maximum utilization of RAT resources. Each RAT-specific MAC layer MAC1 and MAC2 is responsible for scheduling within its associated radio access technology. However, since many data flows Flow 1-Flow 3 may be mapped onto the same radio access technology, buffering will be required before the RAT-specific MAC layer MAC1 and MAC2 actually performs scheduling.

Each RAT-specific MAC layer MAC1 and MAC2 receives channel measurements and other status information from the respective physical layer PHY1 or PHY2, which is indicated by the dotted arrows in Fig. 2. These measurements and information can be used together with user and data flow priorities to perform scheduling using RAT-specific mechanisms. At least a part of the status information, i.e. the air interface conditions, must also be provided to the multi-radio Media Access Control sublayer MR-MAC, also indicated by dotted arrows in Fig.2, in order to allow for the fast reselection of the most appropriate radio access technology for each particular data flow Flow 1-Flow 3 at any given time. This information is provided either in a RAT-specific format or in a unified format.

The amount of buffering required above the RAT-specific MAC layers MAC1 and MAC2 will be considerably higher if the multi-radio Media Access Control sublayer MR-MAC is not integrated with the RAT specific MAC sublayers MAC1 and MAC2. The decisions taken by the multi-radio Media Access Control sublayer MR-MAC will be less accurate, the larger the buffers are, since RAT selection will be based on actual radio interface conditions but the MR-RLC frames will not be immediately sent, but buffered during a certain period of time before their scheduling. Consequently, reaction times will be rather high without an integration of the different MAC sublayers MAC1 and MAC2.

In a preferred embodiment, the multi-radio Media Access Control sublayer MR-MAC responsible for multi-radio selection and the MAC layers MAC1 and MAC2 associated to the different radio access technologies can be integrated in the same node. This would be similar to the use of two different air interfaces within the same mobile communications system, e.g. the use of Wideband Code Division Multiplexing (WCDMA) and Orthogonal Frequency Division Multiplexing (OFDM) in UMTS. This would allow to react faster to any changes in the different radio access technologies due to the availability of more recent status information as a result of the integration. In this case, selection of a different radio access technologies can cope with fast changes in radio conditions, due to a lower amount of buffering before the RAT-specific MAC layers MAC1 and MAC2 and the availability of more recent and hence accurate status information.

In our example depicted in Fig. 1, this is achieved by means of colocating the two radio controllers RC1 and RC2 in a common radio controller and colocating the base transceiver stations BTS2 with BTS3 and BTS1 with BTS4 respectively. Then, the access controller MRAC can be integrated in the two colocated base transceiver stations. The multi-radio Radio Link Control sublayer MR-RLC is implemented in the common radio controller and the multi-radio Media Access Control sublayer MR-MAC is implemented on the one hand together with the MAC layers MAC1 and MAC2 in the base transceiver station BTS2 colocated with BTS3 and on the other hand together with the MAC layers MAC1 and MAC2 in the base transceiver stations BTS1 colocated with BTS4. Thus, the data flows Flow1-Flow3 are sent from the core network CN or from other mobile or fixed communication networks MCN or INT via the common radio controller and the respective base transceiver stations BTS2 colocated with BTS3 or BTS1 colocated with BTS4 to the dedicated mobile terminal MT1, MT2 or MT3.

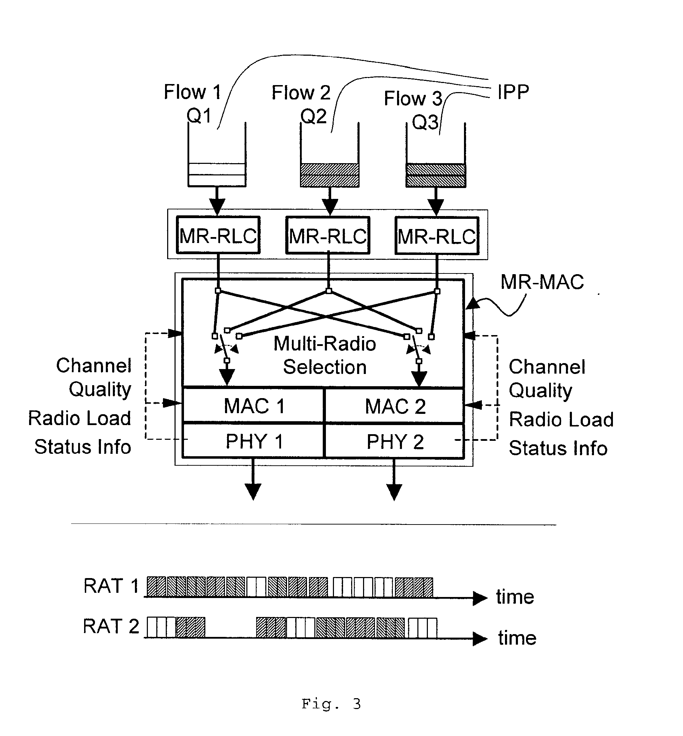

The method according to this embodiment is depicted in Fig. 3. The method described by means of Fig. 3 is similar to that described in Fig. 2 except that in Fig. 3, the multi-radio Media Access Control sublayer MR-MAC is implemented together with the MAC layers MAC1 and MAC2 and the physical layers PHY1 and PHY2 in a common communication network device, the colocated base transceiver stations BTS2 and BTS3, and BTS1 and BTS4 in our example, depicted in Fig. 1. In Fig.3, the colocation of the multi-radio Media Access Control sublayer MR-MAC together with the MAC layers MAC1 and MAC2 and the physical layers PHY1 and PHY2 is indicated by a common frame in Fig.3.

Since it is now possible to react faster to changes, the system can successfully cope with a temporary unavailability of e.g. the second radio access technology caused e.g. by a collision in a WLAN-like radio access technology, by redirecting data towards the first radio access technology, as shown at the bottom of Fig. 3. As in the example described in Fig. 2, in the upper row, the data flow of MAC frames by means of the first radio access technology RAT1 is depicted and in the lower row, the data flow of MAC frames by means of the second radio access technology RAT2 is depicted. The faster reaction to changes compared to the example in Fig. 2 results in switching of the data flows Flow 1-Flow 3 on a finer time scale as can be seen in both rows. A positive effect of this is, that during the time period of unavailability of the second radio access technology, data belonging to the data flow Flow2 can be switched to the first radio access technology and can be transmitted and do not have to wait in the buffer of the MAC layer MAC2 till the second radio access technology is available again.

For reliable data services, acknowledgements are managed by the MR-RLC sublayer. With independence of the radio access technology selected for the transmission of a particular MR-RLC Protocol Data Unit, the usage of common segmentation and Protocol Data Unit numbering at the MR-RLC layer enables the transmission of the corresponding acknowledgement or negative acknowledgement in case of erroneous reception through any of the radio access technologies, and not necessarily through the one used for the transmission of the MR-RLC Protocol Data Units.

## Claims

1. A method for fast reselection of the appropriate radio access technology for transmission of data packets belonging to various data flows Flow1-Flow3 in a communication network deploying radio access technologies **characterized in, that**
• a multi-radio Radio Link Control (RLC) sublayer (MR-RLC) and a multi-radio Medium Access Control (MAC) sublayer (MR-MAC), both common to at least two radio access technologies, are used for said transmission,
• a segmentation common to said at least two radio access technologies of the data packets into multi-radio Radio Link Control Protocol Data Units is performed on the multi-radio RLC sublayer (MR-RLC),
• a numeration of the multi-radio Radio Link Control Protocol Data Units is performed,
• the multi-radio MAC sublayer (MR-MAC) is configured by means of radio resource management (RRM) procedures with the information which radio access technologies are suitable for each of said data flows,
• said reselection is performed on the multi-radio MAC sublayer (MR-MAC) dependent on said information and the air interface conditions of said at least two radio access technologies,
• and the multi-radio Radio Link Control Protocol Data Units are inserted into MAC frames of the respective radio access technology.

2. A method according to claim 1, **characterized in, that** in order to insert the multi-radio Radio Link Control Protocol Data Units into the MAC frames, a second segmentation or a concatenation of the multi-radio Radio Link Control Protocol Data Units is performed dependent on the size of the multi-radio Radio Link Control Protocol Data Units and the size of the MAC frames.

3. A method according to claim 1, **characterized in, that** padding is performed in the MAC frames.

4. A method according to claim 1, **characterized in, that** the multi-radio Radio Link Control (RLC) sublayer (MR-RLC) performs Automatic Repetition Request.

5. An access controller (MRAC) for fast reselection of the appropriate radio access technology for transmission of data packets belonging to various data flows Flow1-Flow3 in a communication network deploying radio access technologies **characterized in, that** said access controller (MRAC) comprises means for transmitting data using a multi-radio Radio Link Control (RLC) sublayer (MR-RLC) and a multi-radio Medium Access Control (MAC) sublayer (MR-MAC), both common to at least two radio access technologies and means for performing said reselection on the multi-radio MAC sublayer (MR-MAC).

6. An access controller (MRAC) according to claim 5, **characterized in, that** said access controller (MRAC) is colocated with at least one radio controller (RC1, RC2).

7. An access controller (MRAC) according to claim 5, **characterized in, that** said access controller (MRAC) is colocated with at least one base transceiver station (BTS1-BTS4) .

8. A program module to be executed in an access controller (MRAC) for fast reselection of the appropriate radio access technology for transmission of data packets belonging to various data flows Flow1-Flow3 in a communication network deploying radio access technologies, **characterized in, that** if the program module is activated, said access controller (MRAC) uses a multi-radio Radio Link Control (RLC) sublayer (MR-RLC) and a multi-radio Medium Access Control (MAC) sublayer (MR-MAC), both common to at least two radio access technologies, for data transmission in the communication network and performs said reselection on the multi-radio MAC sublayer (MR-MAC).

9. A communication network comprising at least one mobile terminal (MT1-MT3), at least one base transceiver station (BTS1-BTS4), at least one radio controller (RC1, RC2) and at least one access controller (MRAC), **characterized in, that** said at least one access controller (MRAC) uses a multi-radio Radio Link Control (RLC) sublayer (MR-RLC) and a multi-radio Medium Access Control (MAC) sublayer (MR-MAC), both common to at least two radio access technologies, for data transmission in the communication network, and performs fast reselection of the appropriate radio access technology on the multi-radio MAC sublayer (MR-MAC).
